# EUROPEAN PATENT SPECIFICATION

(11) **EP 1 314 510 B1**
(45) Date of publication and mention of the grant of the patent: **19.03.2008**
(21) Application number: 02021556.2
(22) Date of filing: 26.09.2002
(51) Int. Cl.: B23K 37/00

(54) **Method of welding three-dimensional structure and apparatus for use in such method**
Verfahren und Vorrichtung zum Schweissen einer dreidimensionalen Struktur
Méthode et dispositif pour souder une structure tridimensionelle

(30) Priority: 26.11.2001 JP 2001359985; 11.09.2002 EP 02020434
(43) Date of publication of application: 28.05.2003
(73) Proprietor: MITSUBISHI HEAVY INDUSTRIES, LTD., Tokyo (JP)
(72) Inventor: Fujita, Ken, Takasago Research & Developmt. Center, Arai-cho, Takasago-shi, Hyogo-ken (JP); Tsunatani, Toshihiko, Takasago Rese.& Devpt. Cent., Arai-cho, Takasago-shi, Hyogo-ken (JP); Kitagawa, Tomoaki, Takasago Research& Devpt. Cent., Arai-cho, Takasago-shi, Hyogo-ken (JP); Mega, Masahiko, Takasago Research & Devpt. Center, Arai-cho, Takasago-shi, Hyogo-ken (JP); Takeuchi, Yasushi, Takasago Machinery Works, Arai-cho, Takasago-shi, Hyogo-ken (JP)
(74) Representative: Henkel, Feiler & Hänzel

(56) References cited:
- EP-A- 0 152 594
- EP-A- 0 812 662
- US-A- 5 572 102
- US-A- 6 153 853
- PATENT ABSTRACTS OF JAPAN vol. 2000, no. 12, 3 January 2001 (2001-01-03) & JP 2000 263272 A (AMADA CO LTD), 26 September 2000 (2000-09-26)

## Description

The present invention relates to a method of welding a plurality of members to manufacture a three-dimensional structure and an apparatus for use in such a method when a plurality of members are connected to be formed into a three-dimensional structure.

### Description of the Related Art

Generally, for manufacturing a three-dimensional structure(for example, a tail tube of a gas turbine combustor), a plurality of members are connected with each other by welding to form a three-dimensional structure. They are welded by gas shielded arc welding using shield gas(TIG welding, MAG welding, MIG welding, electro-gas arc welding), plasma welding, and laser beam welding, etc.

By the way, when connecting a plurality of members by TIG welding, generally the welding has been carried out by hand. In the case of hand welding, the quality of the welded part is various depending on the skill of the worker, since the location, width etc. of the welding position is different according to the line of welding(welding line). As a result, the quality of the welded structure is unstable.

For this reason, the welding by the use of carbon dioxide(CO₂) laser welding has been adopted in which the position to be welded is indicated by irradiating the position by a laser spot light and welding is done taking the laser spot light as a guide.

However, when the method of welding the position indicated by the laser spot light as described above is applied for welding a plurality of members to form a three-dimensional structure, there may occur the case the laser spot light deviate from the position to be welded depending on the position of the laser light emission and the irradiated position. For this reason, when welding was carried out on the position irradiated by the laser spot light, faulty welding such as the deviation from the weld line to be welded occurred in many cases, resulting in the necessity of repairing faulty weld.

Particularly, at the production of a three-dimensional structure by combining a plurality of members, plastically deformed member themselves may be deviated a little from the design drawing(designated shape). Faulty welding tends to occur inevitably when such members are combined and welded even when welding position is irradiated by a laser spot light, for the laser spot light may often deviate from the position to be welded.

To eliminate the disadvantage like this, a teaching method in YAG laser beam machine is disclosed in Japanese Patent Application Publication No.2000-263272, in which the teaching is executed beforehand three-dimensional laser machining is carried out by irradiating the work with the YAG laser light which is emitted from a laser oscillator, transmitted via a fiber-optic cable, and radiated onto the work through the light-gathering lens provided in the laser machining head, characterized in that, the positions in the direction of height of a plurality of teaching points on the work are detected by the height detector provided in the laser machining head, a light for measurement emitted from a light source head which is provided outside the laser machining head and is set beforehand to pass the focussed position of the YAG laser light, irradiates the plurality of teaching points one after another, each reflected light from the work is photographed by a photographing means to represent on a display, the focussed position of the YAG laser light is detected by moving the coordinates of the reflected image on the display back-and-forth and side-to-side to allow the image coincide with the focussed position of the YAG laser light, a master job is produced by automatically storing the three-dimension data consisting of the position in back-and-forth and side-to-side direction and the height position of each of the teaching points by an image processing apparatus, and for ordinary job a corrected job for each work is produced by automatic analysis and correction of said master job at the same points as those of said master job on the basis of the three-dimension data of the plurality of the teaching points of said master job in said processing apparatus as necessary.

According to the invention, the three-dimension data consisting of back-and-forth and side-to-side position and height position is determined automatically for each of the plurality of teaching points by the image processing apparatus, analyzed, checked, and corrected to be reflected in the program, so that teaching accuracy is improved, stable laser machining is performed, and further when the work is changed, the check and correction are automatically executed by the image processing apparatus. Therefore, the checking and correcting process of the teaching points by the worker when the work is changed is eliminated, which eliminates the needs for workers burden and time, resulting in stable small lot production of three-dimensional structure without using jigs of high accuracy and highly accurate component members.

However, in the prior art like this, operation is needed for making the light image coincide with the focussed position of the YAG laser light by moving the light image back-and-forth and side-to-side on the display after the height position of each of the plurality of teaching points is detected in order to obtain the three-dimension data consisting of back-and-forth and side-to-side position and height position. Therefore that teaching operation becomes complicated.

US-A-5 572 102 discloses a vision system for controlling welding robots and a method of controlling a welding robot using the vision system. This vision system includes an unoriented light source to illuminate a part to be welded so that a light intensity gradient is created along a seam to be welded. An image of the light intensity gradient is captured by one or more fixed solid-state video cameras. The image is compared with a stored image of a reference part so that a deviation of the seam to be welded with respect to the seam of the reference part can be computed for each of a plurality of predefined reference points. The deviation at each reference point is translated by a microprocessor into a coordinate adjustment which is downloaded to a controller for the robot. The controller converts the learned coordinates of the reference part into the actual coordinates of the seam to be welded using the coordinate adjustments provided by the microprocessor, permitting the robot to weld the seam without vision sensing or weld path adjustments during the welding process. Thereby, real time weld path correction maneuvers are eliminated.

EP-A-812 662 discloses an alternative manner for determining the image of welding lines in a composite sensor robot system.

### SUMMARY OF THE INVENTION

It is the object of the present invention to provide a method of welding a three-dimensional structure which is formed by combining or connecting a plurality of members by welding along welding lines, by which automatic welding matching to the three-dimensional shape can be performed with simple operation.

According to the present invention, the method of welding such three-dimensional structure comprises the features of claim 1.

As the amount of deviation of welding position from the design data at each welding point is determined from the image obtained by photographing the welding point according to the teaching data consisting of the three-dimensional position and the normal vector at the three-dimensional position, then the modified teaching data is obtained by correcting the teaching data on the basis of the amount of deviation of position from the design data, and after this the welding is performed along the welding line, the accuracy of the welding is high when forming a three-dimensional structure.

By establishing the supplemented teaching data by adding the welding condition, which depends on the amount of deviation of welding position from the design data, to the modified teaching data, and performing the welding according to the supplemented teaching data, the welding condition at each welding point is determined according to said amount of deviation of position from the design data at each welding point, resulting in more accurate welding.

It is suitable that said amount of deviation of position from the design data is determined, for example, by light section method in said first step. It is also suitable that the amount of deviation of position from the design data in a vertical direction, gap width, and amount of deviation from the welding line of the design data in the direction crossing perpendicular to the welding line crossing in the direction tangential to the surface of the member to be welded(hereafter referred to as the amount of deviation from the designated seam line) at each welding point are determined by light section method as the first deviation, the amount of deviation of position from the design data in a horizontal direction is determined by shading method as the second deviation, and said first and second deviation are used as said amount of deviation of position from the design data.

By determining the amount of deviation of welding position from the design data in a vertical direction, gap width, and amount of deviation from the designated seam line at each welding point as the first deviation, the amount of deviation of position from the design data in a horizontal direction by shading method as the second deviation, and modifying the teaching data according to the first and second deviations, the correction of the deviation of welding point can be executed accurately.

It is suitable that said welding points are photographed to obtain welding images during welding and said modified teaching data is further modified according to the welding images in the third step.

By this, as the amount of deviation of welding position from the design data is corrected during welding, more accurate welding is possible.

Further, according to the present invention, an apparatus for welding a three-dimensional structure comprises the features of claim 5.

By using the apparatus like this, the welding to form a three-dimensional structure can be carried out with good accuracy, matching to the three-dimensional shape.

Further, the welding condition depending on said amount of deviation of position from the design data is stored in said memory means, said control means allows the welding condition depending on said amount of deviation of position from the design data to be added to said modified teaching data to obtain supplemented teaching data, controls the movement of said welding head according to said supplemented teaching data instead of said modified teaching data, and also controls the output of said welding head and the supply of welding wire.

By welding according to the supplemented teaching data, the welding condition is determined depending on the amount of deviation of welding position from the design data at each welding point, so that welding can be performed more accurately.

Said photographing means has a light emitting section for emitting laser slit light and a CCD camera for receiving the laser slit light so that said image data is obtained by light section method.

### BRIEF DESCRIPTION OF THE DRAWINGS

FIG. 1 is a block diagram showing an example of the apparatus for welding a three-dimensional structure according to the present invention.
FIG.2 is a schematic representation showing an example of the drive mechanism and photographing apparatus of the apparatus for welding a three-dimensional structure according to the present invention.
FIG.3 is a flowchart for explaining the operation of the apparatus for welding the three-dimensional structure shown in FIG.1.
FIG.4 is a perspective illustration of the dismantled members of an example of a three-dimensional structure.
FIG.5 is a perspective illustration of an example of a three-dimensional structure in assembled state.
FIG.6 is a drawing for explaining the method of sensing the state in welding of the three-dimensional structure shown in FIG.1.

### DETAILED DESCRIPTION OF THE PREFERRED EMBODIMENTS

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

The present invention will now be explained hereunder, taking the tail tube of a gas turbine combustor as an example of a three-dimensional structure, about the manufacturing of the tail tube of gas turbine from a plurality of three-dimensional members by welding. However, the present invention can be applied similarly to other three-dimensional structures to be manufactured by welding together a plurality of three-dimensional members.

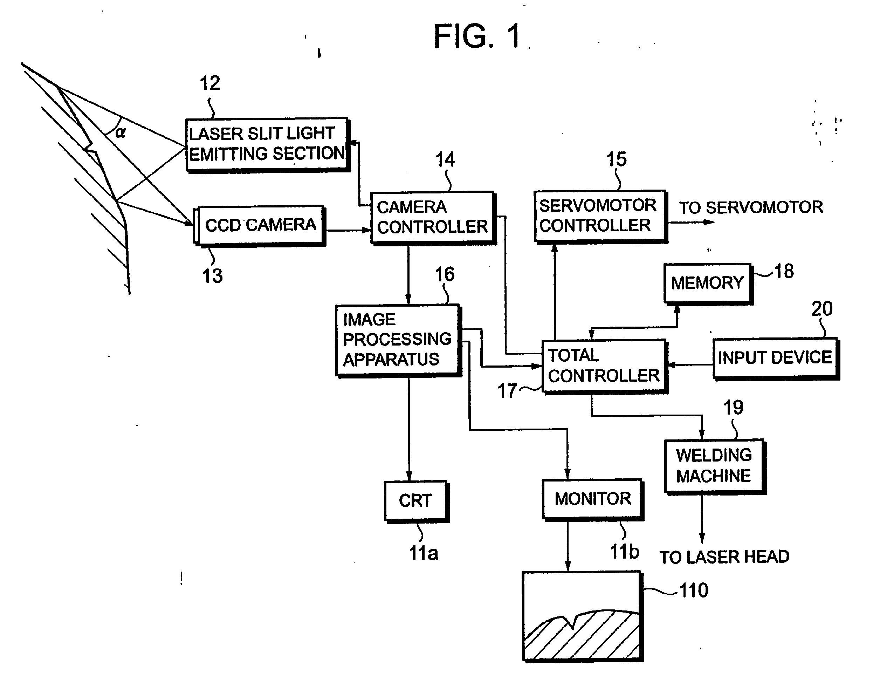

Referring to FIG.1, the apparatus for welding a three-dimensional structure is provided with a display(CRT) 11a, a monitor 11b, a laser slit light emitting section 12, a CCD camera 13, a camera controller 14, a servomotor controller 15, an image processing apparatus 16, total controller 17, a memory 18, a welding machine 19, and an input device 20.

A unit composed of said laser slit light emitting section 12 and CCD camera 13 is hereafter referred to as a laser slit light sensor.

In the example shown in the drawing, said welding machine 19 is, for example, a laser beam welding machine using YAG laser. Welding is performed by the laser light emitted from a laser head which is a welding torch head.

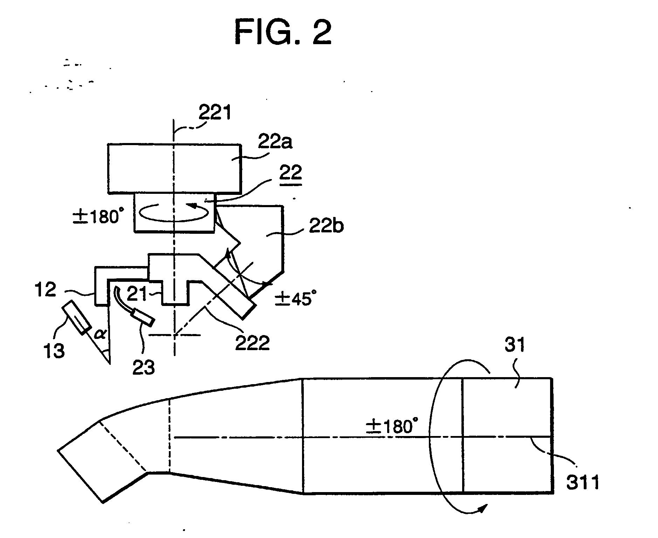

Here, referring to FIG.2, the laser head 21 is attached to a supporter 22 and controlled by the total controller 17 via the servomotor controller 15 to move in three directions x,y,z including weaving movement. To be more specific, the supporter 22 has a supporting part 22a and an arm 22b attached to the supporting part 22a for rotation. The supporting part 22a is rotatable around the axis 221 indicated by a dashed dotted line in a clockwise and counterclockwise direction by 180°. The arm 22b is rotatable around the axis 222 indicated by a dashed dotted line in a clockwise and counterclockwise direction by 45°.

A wire supply head 23 is located near the laser head 21. When welding is performed, welding wire is supplied to welding position from the wire supply head 23. The laser slit light emitting section 12 emits a laser slit light onto the welding position(line to be welded(welding groove line)) so that the laser slit line crosses the welding groove line.

The CCD camera 13 receives the laser slit light from the direction inclined by a determined angle α with regard to the emitting direction of the laser slit light to grasp the section of the welding groove by light section method. The received light is given to the camera controller 14. The laser slit light emitting section 12 and CCD camera 13 are attached to the supporter 22 as a unit. The apparatus for welding a three-dimensional structure is provided with a height sensor(not shown in the drawings), which controls the position(height) of the laser slit light emitting section 12 and CCD camera 13 from the welding groove.

In said memory 18 are stored a variety of design drawings(three-dimension design data) of three-dimensional structures(tail tubes of combustors are meant here). These three-dimensional data include the design data of a plurality of members(three-dimensional member) and the design data of tail tubes which are composed of a plurality of members butted or connected together. Further, the lines formed when a plurality of the members are butted are included as welding line data in said three-dimensional data. Each welding line data is established as a set consisting of the vector representing three-dimensional position(coordinates) and a normal vector at the position. For example, a point on a welding line is defined as P1(x,y,z,i,j,k). (x,y,z) is a point on the welding line expressed in x-y-z coordinates, and (i,j.k) expresses the normal vector at said point to the surface which includes the welding line. The above-mentioned welding line data is the teaching data.

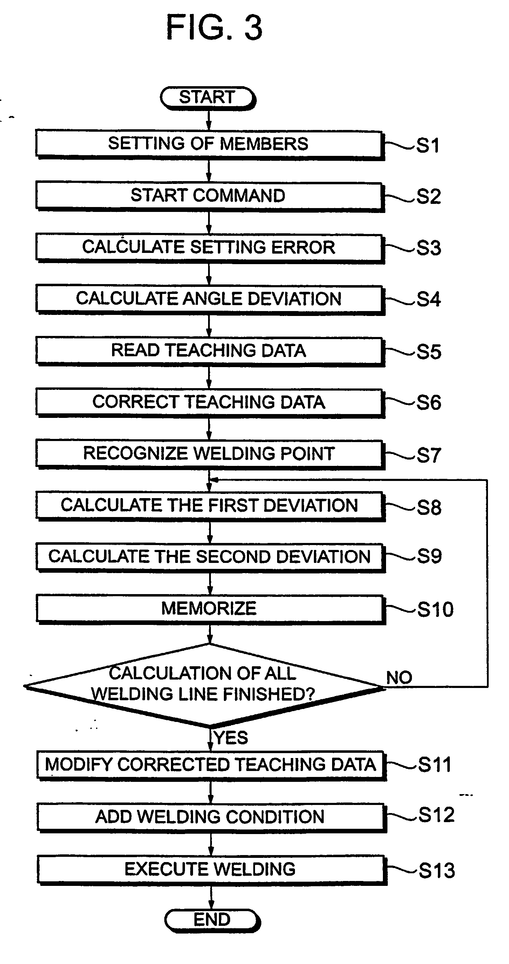

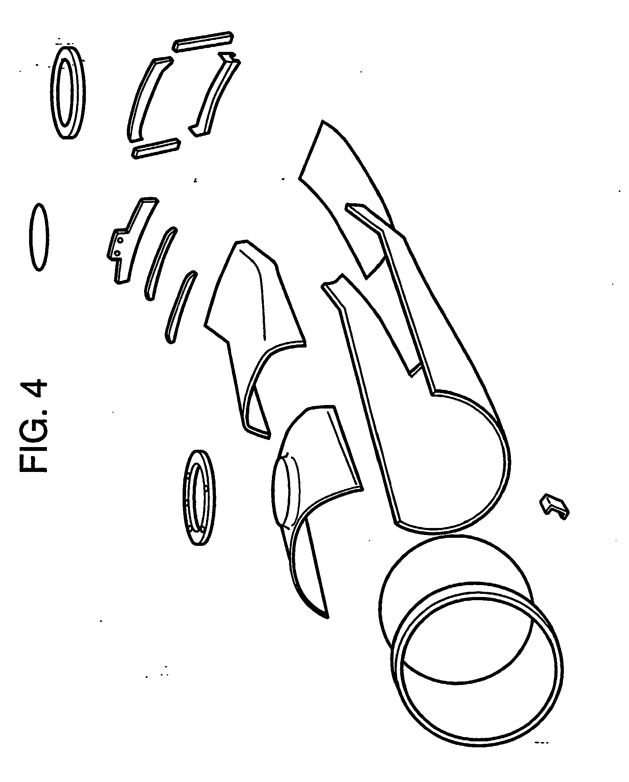

Referring to FIG.1, FIG.2, and FIG.3, first, each of the members for composing a combustor tail tube 31 are set to a chuck(not shown in the drawings)(step S1). Each member may deviate more or less from the design drawing when plastically deformed in the manufacturing process. For example, each of the members shown in FIG.4 is set to a chuck to form the tail tube assembly 31a. A line 31b is seen as a line to be welded on the tail tube assembly 31a. Each of the members is set at the predetermined set position, however, there may inevitably occur deviation.

After each member is set to the chuck, weld start command is given from the input device 20(step S2). The signal for selecting a combustor tail tube is included in the weld start command. The total controller 17 recognizes deviation from the predetermined set position in side-to-side and up-and-down directions at a part (for example, at an end part) of the assembly 31a. For recognizing said deviation, the image data is obtained by shading method from the image photographed by the CCD camera 13 and taken into the image processing apparatus 16. The image data is displayed, for example, on the monitor 11b as an image.

The total controller 17 is provided with predetermined set position data and determines setting errors, based on the set position data and the image data( step S3). Then, the total controller 17 calculates the deviation angle of the direction of the rotation axis of the assembly 31a(as shown in FIG.2, the combustor tail tube 31(assembly 31a) can be rotated around the rotation axis 311 indicated by a dotted dashed line in a clockwise and counterclockwise by 180° )(step S4). The deviation angle is displayed, for example, on the CRT 11a.

Then, the total controller 17 reads the appropriate teaching data from the memory 18 according to the signal for selecting a combustor tail tube(step S5) and corrects it on the basis of said deviation angle to obtain corrected teaching data(S6). The total controller 17 controls the laser slit light sensor via the camera controller 14 according to the corrected teaching data and the servomotor(not shown in the drawings) via the servomotor controller 15 to move the supporter 22 in the direction of x, y, and z axes and to rotate the assembly 31a around its rotation axis. By this operation, each welding line 31b of the assembly 31a is recognized at a predetermined spacing according to the teaching data(x,y,z,i,j,k)(step S7).The image processing apparatus 16 allows the image 110 obtained from the laser slit light sensor(i.e. CCD camera 13) to be displayed on the monitor 11b.

After all the welding lines are recognized, the total controller 17 allows the laser slit light emitting section 12 to be positioned so that the laser slit light irradiates the groove of the welding line 31b in a state it crosses the welding line and the CCD camera 13 to be positioned so that it receives the laser slit light from the direction slanting by a determined angle with regard to the emitting direction of the laser slit light(as mentioned before, the laser slit light sensor is controlled via the camera controller 14 according to the corrected data and the servomotor is controlled via the servomotor controller 15 to move the supporter 22 in the directions of x, y, z axes and rotate the assembly 31a around its axis of rotation).

Then, the camera controller 14 allows the laser slit light emitting section 12 to emit the laser slit light, which is received by the CCD camera 13, in other words, the welding line is photographed by light section method. The width, amount of deviation of position from the design data(up-and -down direction), and amount of deviation from the designated seam line at each welding point are determined from the image obtained from the CCD camera 13, and these data is established as the first deviation(step 8). Further, the photographing by CCD camera 13 at each welding point along the welding line 31b is performed, the amount of deviation of position from the design data(in side-to-side direction) at each welding point is determined by shading method, and these data is established as the second deviation(step 9).

After the first and second deviation at each welding point concerning a welding line 31b are determined, the total controller 17 allows the first and second deviation at each welding point to be memorized in the memory 18(step 10). When the first and second deviation of all of the welding line 31b are memorized, the total controller 17 shifts to the control of welding operation.

By the way, the welding condition(electric current, voltage, moving speed of the supporter 22, weaving width, weaving speed, and welding wire supply speed, etc.) depending on the width(of the gap) and amount of deviation from the designated seam line specified by said teaching data for each welding point(position to be welded) is memorized in the memory 18, and the total controller 17 modifies the corrected teaching data by the first and second deviation at each welding point to establish modified teaching data(step S11). Then, the total controller 17 reads out the welding condition which depends on the gap and amount of deviation from the designated seam line for each welding line from the memory 18 and adds the welding condition to the modified teaching data(which is hereafter referred to as supplemented teaching data)(step S12).

The total controller 17 allows the servomotor to move the laser head 21 via the servomotor controller 15 and the welding machine 19 according to the supplemented teaching data, and it also allows the welding head 21 to emit laser light. The welding wire is supplied from the wire supply head 23. In other words, the welding head 21 is moved to each welding point according to the supplemented teaching data and welding is performed by controlling the welding machine 19 and the supply of wire depending on the welding condition included in the supplemented teaching data (step S13).

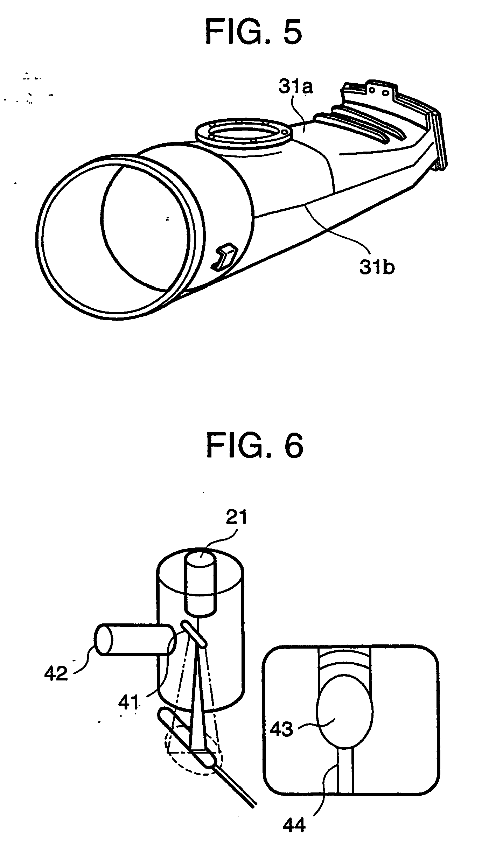

The correction of the deviation of welding position may be executed by image sensing during the welding as shown in FIG.6. To be more specific, a half mirror 41 is provided to the output end side of the laser head 21, laser light is emitted from the laser head 21 onto the welding point via the half mirror 41. The image of a welding point is input to a CCD camera 42 via the half mirror 41. Thus, the image signal including a molten pool 43 and welding groove line 44 is given from the CCD camera 42 to the image processing apparatus 16, which allows the image signal to be displayed on the monitor 11b. The operator observes the displayed welding image and corrects the position of the laser head 21. The CCD camera 42 moves in-synchronism with the laser head 21

As has been described, the position of the welding point to be welded on the welding line is photographed by light section method according to the teaching data determined by the three-dimensional position and its normal vector to measure the shape of the welding line, and then the welding condition is modified and set according to the result of the measurement. Therefore, the welding in manufacturing a three-dimensional structure can be carried out with good accuracy. That is to say, even if the component members of the three-dimensional structure deviate in some degree from their drawings, the welding can be performed, matching to the shape of the component members and welding grooves, with good accuracy.

As has been described in the forgoing, according to the present invention, the amount of deviation of welding position from the design data is determined from the image obtained by photographing at each welding point along each welding line at a predetermined spacing according to the teaching data consisting of the three-dimensional position and the normal vector at each point determined on the basis of the design data of the three-dimensional structure, a modified teaching data is obtained by modifying the teaching data by the amount of deviation of welding point from the design data, and then the welding is carried out along the welding line according to the modified teaching data, so that the welding in manufacturing a three-dimensional structure can be performed with good accuracy matching to the three-dimensional shape.

Further, by welding according to the supplemented teaching data which include the welding condition in accordance with the amount of deviation of welding position from the design data, the welding is done at each welding point under the condition determined according to the amount of deviation of position from the design data at each welding position. As a result, the welding accuracy can be further improved.

By obtaining as the first deviation the amount of deviation of welding line from the design data in the vertical direction at each welding point, gap width, and amount of deviation from the designated seam line by light section method and as the second deviation the deviation of the welding line in the horizontal direction at each welding point by shading method, and modifying the teaching data on the basis of the first and second deviation, the deviation of welding point can be corrected with good accuracy.

In addition, by obtaining the welding image at welding points during welding and further modifying said modified teaching data according to the welding image, the deviation of welding position can be modified during welding, resulting in more accurate welding.

## Claims

1. A method of welding a three-dimensional structure (31) which is formed by combining and connecting a plurality of members by welding along welding lines (31b), comprising:
a first step (S3-S9) of establishing three-dimensional positions (coordinates) of welding points determined on each of said welding lines (31b) at a predetermined spacing on the basis of design data of said three-dimensional structure (31), teaching data consisting of the three-dimensional positions of said welding points, and the normal vectors at the points, and of determining the amount of deviation of position from the design data at each welding point from an image obtained by photographing each welding line (31b) at each welding point according to said teaching data;
a second step (S11) of obtaining modified teaching data corrected by said amount of deviation of position from the design data; and
a third step (S13) of welding along said welding line (31b) on the basis of said modified teaching data;
**characterized in that**
supplemented teaching data, which is teaching data consisting of said modified teaching data and welding condition in accordance with the amount of deviation of position from the design data to said modified teaching data is used in said second step, and the welding is performed according to said supplemented teaching data instead of said modified teaching data in said third step.

2. The method of welding a three-dimensional structure according to claim 1, wherein said amount of deviation of position from the design data is determined by light section method in said first step.

3. The method of welding a three-dimensional structure according to claim 1, wherein the amount of deviation of position from the design data in a vertical direction, gap width, and amount of deviation from the designated seam line at each welding point are determined by light section method as the first deviation, the amount of deviation of position from the design data in a horizontal direction is determined by shading method as the second deviation, and said first and second deviation are used as said amount of deviation of position from the design data.

4. The method of welding a three-dimensional structure according to claim 1, 2 or 3, wherein said welding points are photographed to obtain welding images during welding and said modified teaching data is further modified according to the welding images in said third step.

5. An apparatus for welding a three-dimensional structure (31) formed by combining and connecting a plurality of members by welding along welding lines (31b), said apparatus comprising:
a memory means (18) for storing teaching data consisting of three-dimensional positions(coordinates) of welding points determined on each of said welding lines (31b) at a predetermined spacing on the basis of design data of said three-dimensional structure (31) and the normal vectors at the points;
a photographing means (12,13,14,16) which is adapted to be controlled to photograph said welding points in order to obtain image data thereof according to said teaching data;
an image processing means (17) which is adapted to determine an amount of deviation of position from the design data at each of said welding points by processing said image data; and
a control means (15,17) which is adapted to establish modified teaching data by modifying said teaching data according to said amount of deviation of position from the design data, and to control a welding head (21) so that it moves and welds along said welding line (31b) according to said modified teaching data;
**characterized in that**
said memory means (18) is further adapted to store a welding condition depending on said amount of deviation of position from the design data; and
said control means (15,17) is adapted to add the welding condition depending on said amount of deviation of position from the design data to said modified teaching data to obtain supplemented teaching data, to control the movement of said welding head (21) according to said supplemented teaching data instead of according to said modified teaching data, and also to control the output of said welding head (21) and the supply of welding wire.

6. The apparatus for welding a three-dimensional structure according to claim 5,wherein said photographing means (12,13,14,16) has a light emitting section (12) for emitting laser slit light and a CCD camera (13) for receiving the laser slit light so that said image data is obtained by light section method.

## Patentansprüche

1. Verfahren zum Schweißen einer dreidimensionalen Struktur (31), die durch Kombinieren und Verbinden mehrerer Elemente durch Schweißen entlang Schweißlinien (31b) gebildet wird, umfassend:
einen ersten Schritt (S3-S9) des Erstellens von dreidimensionalen Positionen (Koordinaten) von Schweißpunkten, die auf jeder der Schweißlinien (31b) mit einem vorbestimmten Abstand auf der Basis von Entwurfsdaten der dreidimensionalen Struktur (31) bestimmt werden, Lerndaten (teaching data), die aus den dreidimensionalen Positionen der Schweißpunkte bestehen und von den Normalvektoren an den Punkten, und des Bestimmens des Positionsabweichungsbetrags von den Entwurfsdaten an jedem Schweißpunkt anhand eines durch Photographieren jeder Schweißlinie (31b) an jedem Schweißpunkt gemäß den Lerndaten erhaltenen Bildes,
einen zweiten Schritt (S11) des Erhaltens von modifizierten Lerndaten, die um den Positionsabweichungsbetrag von den Entwurfsdaten korrigiert sind, und
einen dritten Schritt (S13) des Schweißens entlang der Schweißlinie (31b) auf der Basis der modifizierten Lerndaten,
**dadurch gekennzeichnet, dass**
in dem zweiten Schritt ergänzte Lerndaten verwendet werden, die Lerndaten sind, welche aus den modifizierten Lerndaten und einem Schweißzustand gemäß dem Positionsabweichungsbetrag von den Entwurfsdaten, zusätzlich zu den modifizierten Lerndaten bestehen, und der Schweißvorgang in dem Schritt entsprechend den ergänzten Lerndaten statt den modifizierten Lerndaten durchgeführt wird.

2. Schweißverfahren einer dreidimensionalen Struktur nach Anspruch 1, wobei der Positionsabweichungsbetrag von den Entwurfsdaten durch ein Lichtschnittverfahren (light section method) in dem ersten Schritt bestimmt wird.

3. Schweißverfahren einer dreidimensionalen Struktur nach Anspruch 1, wobei der Positionsabweichungsbetrag von den Entwurfsdaten in einer vertikalen Richtung, eine Spaltbreite und ein Abweichungsbetrag von der ausgewählten Nahtlinie an jedem Schweißpunkt durch ein Lichtschnittverfahren als die erste Abweichung bestimmt werden, der Positionsabweichungsbetrag von den Entwurfsdaten in einer Horizontalrichtung durch ein Abschattungsverfahren (shading method) als die zweite Abweichung bestimmt wird, und die ersten und zweiten Abweichungen als der Positionsabweichungsbetrag von den Entwurfsdaten verwendet werden.

4. Schweißverfahren einer dreidimensionalen Struktur nach Anspruch 1, 2 oder 3, wobei die Schweißpunkte photographiert werden, um Schweißbilder während des Schweißvorgangs zu erhalten, und die modifizierten Lerndaten ferner in dem dritten Schritt entsprechend den Schweißbildern modifiziert werden.

5. Vorrichtung zum Schweißen einer dreidimensionalen Struktur (31), die durch Kombinieren und Verbinden mehrerer Elemente durch Schweißen entlang Schweißlinien (31b) gebildet wird, wobei die Vorrichtung umfasst:
ein Speichermittel (18) zum Speichern von Lerndaten, die aus dreidimensionalen Positionen (Koordinaten) von Schweißpunkten bestehen, die auf jeder der Schweißlinien (31b) mit einem vorbestimmten Abstand auf der Basis von Entwurfsdaten der dreidimensionalen Struktur (31) und der Normalvektoren an den Punkten bestimmt werden,
ein Photographiermittel (12,13,14,16), das so gesteuert werden kann, dass es die Schweißpunkte photographiert, um Bilddaten hiervon entsprechend den Lerndaten zu erhalten,
ein Bildverarbeitungsmittel (17), das einen Positionsabweichungsbetrag von den Entwurfsdaten an jedem der Schweißpunkte durch Bearbeiten der Bilddaten bestimmen kann, und
ein Steuermittel (15,17), welches modifizierte Lerndaten durch Modifizieren der Lerndaten entsprechend dem Positionsabweichungsbetrag von den Entwurfsdaten bestimmen und einen Schweißkopf (21) so steuern kann, dass er sich entlang der Schweißlinie (31b) entsprechend den modifizierten Lerndaten bewegt und schweißt,
**dadurch gekennzeichnet, dass**
das Speichermittel (18) ferner einen Schweißzustand in Abhängigkeit von dem Positionsabweichungsbetrag von den Entwurfsdaten speichern kann, und
das Steuermittel (15,17) den Schweißzustand in Abhängigkeit von dem Positionsabweichungsbetrag von den Entwurfsdaten zu den modifizierten Lerndaten addieren kann, um ergänzte Lerndaten zu erhalten, um die Bewegung des Schweißkopfs (21) entsprechend den ergänzten Lerndaten statt entsprechend den modifizierten Lerndaten zu steuern, und um die Leistung des Schweißkopfs (21) und die Zufuhr von Schweißdraht zu steuern.

6. Vorrichtung zum Schweißen einer dreidimensionalen Struktur nach Anspruch 5, wobei das Photographiermittel (12,13,14,16) einen Lichtemissionsabschnitt (12) zum Emittieren von Laserschlitzlicht sowie eine CCD-Kamera (13) zur Aufnahme des Laserschlitzlichts aufweist, so dass die Bilddaten durch ein Lichtschnittverfahren erhalten werden.

## Revendications

1. Procédé de soudage d'une structure tridimensionnelle (31), formée en combinant et en assemblant une pluralité d'éléments par soudage suivant des lignes à souder (31b), comprenant :
une première étape (S3 à S9) consistant à établir des positions (coordonnées) tridimensionnelles de points de référence de soudage, déterminés sur chacune desdites lignes à souder (31b) selon un espacement prédéterminé sur la base de données de calcul de ladite structure tridimensionnelle (31), des données d'apprentissage composées des positions tridimensionnelles desdits points de référence de soudage et des vecteurs normaux aux points, et consistant à déterminer la grandeur de déviation de la position au niveau de chaque point de référence de soudage par rapport aux données de calcul, à partir d'une image obtenue par photographie de chaque ligne à souder (31b) au niveau de chaque point de référence de soudage suivant lesdites données d'apprentissage ;
une deuxième étape (S11) pour l'obtention de données modifiées d'apprentissage, corrigées en fonction de ladite grandeur de déviation de la position, par rapport aux données de calcul ; et
une troisième étape (S13) d'exécution du soudage suivant ladite ligne à souder (31b), sur la base desdites données modifiées d'apprentissage ;
**caractérisé en ce que**
des données supplémentaires d'apprentissage, qui sont des données d'apprentissage composées desdites données modifiées d'apprentissage et d'un paramètre de soudage en fonction de la grandeur de déviation de la position, entre les données de calcul et lesdites données modifiées d'apprentissage, sont utilisées dans ladite deuxième étape, et le soudage est exécuté dans ladite troisième étape, suivant lesdites données supplémentaires d'apprentissage à la place desdites données modifiées d'apprentissage.

2. Procédé de soudage d'une structure tridimensionnelle selon la revendication 1, dans lequel ladite grandeur de déviation de la position par rapport aux données de calcul est déterminée par le procédé dit de la section de lumière dans ladite première étape.

3. Procédé de soudage d'une structure tridimensionnelle selon la revendication 1, dans lequel la grandeur de déviation de la position par rapport aux données de calcul dans une direction verticale, l'écartement des bords et la grandeur de déviation par rapport à la ligne continue de soudage nominale au niveau de chaque point de référence de soudage, sont déterminés par le procédé dit de la section de lumière en tant que première déviation, la grandeur de déviation de la position dans une direction horizontale est déterminée par le procédé dit de la tache en tant que seconde déviation, et lesdites première et seconde déviations sont utilisées en tant que grandeur de déviation de la position par rapport aux données de calcul.

4. Procédé de soudage d'une structure tridimensionnelle selon la revendication 1, 2 ou 3, dans lequel lesdits points de référence de soudage sont photographiés afin d'obtenir des images du soudage pendant l'opération de soudage, et lesdites données modifiées d'apprentissage sont encore modifiées en fonction des images du soudage dans ladite troisième étape.

5. Dispositif de soudage d'une structure tridimensionnelle (31), formée en combinant et en assemblant une pluralité d'éléments par soudage suivant des lignes à souder (31b), ledit dispositif comprenant :
des moyens de mémoire (18) pour conserver des données d'apprentissage consistant en des positions (coordonnées) tridimensionnelles de points de référence de soudage, déterminés sur chacune desdites lignes à souder (31b) selon un espacement prédéterminé sur la base de données de calcul de ladite structure tridimensionnelle (31), et des vecteurs normaux aux points ;
des moyens de photographie (12, 13, 14, 16) qui peuvent être commandés pour photographier lesdits points de référence de soudage afin d'obtenir des images de ceux-ci selon lesdites données d'apprentissage ;
des moyens de traitement d'images (17), qui sont propres à être commandés pour déterminer une grandeur de déviation de la position, par rapport aux données de calcul au niveau de chacun desdits points de référence de soudage, par un traitement desdites données d'images ; et
des moyens de commande (15, 17) qui sont propres à établir des données modifiées d'apprentissage, en modifiant lesdites données d'apprentissage en fonction de ladite grandeur de déviation de la position par rapport aux données de calcul, et à commander une tête de soudage (21) pour qu'elle se déplace et exécute le soudage le long de ladite ligne à souder (31b) en fonction desdites données modifiées d'apprentissage ;
**caractérisé en ce que**
lesdits moyens de mémoire (18) sont, en outre, propres à conserver un paramètre de soudage dépendant de ladite grandeur de déviation de la position par rapport aux données de calcul ; et
lesdits moyens de commande (15, 17) sont propres à ajouter le paramètre de soudage, en fonction de ladite grandeur de déviation de la position par rapport aux données de calcul, auxdites données modifiées d'apprentissage afin d'obtenir des données supplémentaires d'apprentissage pour ainsi commander le mouvement de ladite tête de soudage (21) en fonction desdites données supplémentaires d'apprentissage, au lieu que ce soit en fonction desdites données modifiées d'apprentissage, et également pour commander la sortie de ladite tête de soudage (21) et l'alimentation en fil de soudage.

6. Dispositif de soudage d'une structure tridimensionnelle selon la revendication 5, dans lequel lesdits moyens de photographie (12, 13, 14, 16) comprennent une partie émettrice de lumière (12) afin d'émettre une lumière laser par une fente, et une caméra à CCD (à couplage de charges) (13) afin de recevoir la lumière laser pour ainsi obtenir lesdites données d'images par le procédé dit de la section de lumière.
